# FASCICULE DE BREVET EUROPEEN

(11) **EP 4 100 211 B1**
(45) Date de publication et mention de la délivrance du brevet: **03.07.2024**
(21) Numéro de dépôt: 21702292.0
(22) Date de dépôt: 04.02.2021
(51) Int. Cl.: B25B 31/00, F16B 19/10

(54) **AGRAFE D'ÉPINGLAGE À PINCE CIRCULAIRE AVEC ÉCARTEUR FIXE**
RUNDKLAMMER MIT FESTEM TRENNSTEG
CIRCULAR CLIP PIN CLAMP WITH FIXED SEPARATOR

(30) Priorité: 06.02.2020 FR 2001167
(43) Date de publication de la demande: 14.12.2022
(73) Titulaire: Lisi Aerospace, 75012 Paris (FR)
(72) Inventeur: BRACHET, Julien, 18500 MEHUN SUR YEVRE (FR)
(74) Mandataire: Lavoix
(86) Numéro de dépôt international: PCT/EP2021/052658
(87) Numéro de publication internationale: WO 2021/156362

(56) Documents cités:
- EP-A1- 1 450 053
- EP-A1- 3 147 520
- FR-A1- 3 014 969
- FR-A1- 3 080 155
- US-A1- 2010 314 495

## Description

### Domaine technique

La présente invention appartient au domaine des fixations mécaniques, notamment des fixations temporaires dites agrafes d'épinglage, et concerne plus particulièrement une agrafe d'épinglage à écarteur fixe pourvue d'une pince circulaire à plusieurs becs, dite « multi-becs ».

La présente invention trouve une application directe dans l'assemblage de structures, telles que des plaques, dans l'industrie aéronautique par exemple.

### État de l'art

Il est d'usage, avant de réaliser la fixation définitive de plaques ou tôles par rivetage par exemple, de procéder à un assemblage temporaire des plaques au moyen d'agrafes d'épinglage traversant des trous en regard pratiqués dans lesdites plaques de sorte à les maintenir en position. Ce procédé d'assemblage est particulièrement utilisé dans la construction aéronautique, notamment lors des opérations de jonctionnement entre les ailes et le fuselage d'un aéronef.

Les agrafes d'assemblage à écarteur fixe, telles que décrites dans les documents FR3080155 et FR3014969 au nom de la Demanderesse, comprennent notamment un corps pourvu d'une face d'appui destinée à venir au contact de la face extérieure d'une des deux pièces à assembler, un écarteur fixe par rapport au corps et débouchant de la face d'appui et un élément allongé tel qu'une pince élastique à deux branches munies de becs d'accrochage.

Le document FR 3 014 969 A1 divulgue une agrafe d'épinglage selon le préambule de la revendication 1.

Le document GB959936A décrit une telle agrafe d'assemblage à écarteur fixe dans laquelle les branches de la pince élastique sont reliées via une pièce de sertissage à une tige filetée, l'élément allongé étant muni d'un écrou six pans lui permettant de coulisser dans le corps tout en bloquant sa rotation, et un mécanisme de commande destiné à engendrer un déplacement relatif entre ledit élément allongé et le corps.

Ainsi, sous l'action du mécanisme de commande, l'élément allongé recule en s'écartant progressivement, sous l'action de l'écarteur fixe par rapport au corps, jusqu'à ce que les faces arrière planes des becs d'accrochage s'appliquent contre la face extérieure de la deuxième pièce, en bordure du trou correspondant de celle-ci. Les pièces sont alors fermement pressées les unes contre les autres entre la face d'appui du corps et les faces arrière des becs d'accrochage des branches de la pince.

Bien que ces agrafes d'épinglage soient largement utilisées et nécessitent moins de pièces que les agrafes à écarteur mobile, elles présentent certains inconvénients.

En effet, les agrafes à écarteur fixe existantes ont des corps présentant des diamètres extérieurs assez grands du fait de la présence des écrous six pans bloquant la rotation des pinces, qui rendent leur utilisation délicate lorsque plusieurs agrafes doivent être insérées dans des perçages rapprochés. Un autre inconvénient est que les corps de ces agrafes présentent des longueurs importantes, qui peuvent perturber la course d'un robot qui doit, par exemple, percer ou installer des fixations à proximité des agrafes installées.

### Présentation de l'invention

La présente invention vise à pallier les inconvénients de l'art antérieur, notamment le problème de maintien en position de l'écarteur dans une configuration de pince circulaire (dite cylindrique).

À cet effet, la présente invention concerne une agrafe d'épinglage, selon la revendication 1, pour l'assemblage temporaire d'au moins deux pièces structurales percées, comportant un corps principal tubulaire s'étendant suivant un axe longitudinal X et présentant une face d'appui destinée à venir au contact d'une première face des pièces structurales, une pince apte à traverser des perçages en regard, réalisés dans lesdites pièces, la pince étant mobile en translation suivant l'axe longitudinal, entrainée par la rotation autour dudit axe d'un tirant pourvu d'un alésage taraudé coopérant avec une extrémité filetée de ladite pince, la pince comprenant des branches flexibles se terminant chacune par un bec d'accrochage destiné à venir au contact d'une dernière face des pièces structurales, lesdites branches étant aptes à s'écarter radialement et progressivement le long d'un écarteur, placé entre lesdites branches et fixe par rapport au corps principal, sous l'effet du recul de la pince. Cette agrafe est remarquable en ce que l'écarteur comporte une extrémité transverse bloquée en rotation dans une rainure de blocage ménagée dans un élément fixe par rapport au corps principal, et en ce que la pince comporte au moins une rainure longitudinale apte à coulisser sur ladite extrémité transverse lors du déplacement de la pince par rapport au corps principal et apte à bloquer la rotation de ladite pince par rapport à ladite extrémité transverse. Au moins une fente séparant deux branches adjacentes communique avec au moins la rainure longitudinale de la pince.

La rainure de blocage est réalisée dans une pièce interne logée dans une partie terminale du corps principal, ladite pièce interne étant fixe par rapport audit corps principal.

Plus particulièrement, la pièce interne comprend une surface extérieure multi-pans et la partie terminale comporte au moins une encoche apte à recevoir une arête de la pièce interne.

Alternativement, la pièce interne comprend une surface extérieure multi-pans et la partie terminale comporte une surface intérieure multi-pans.

Selon un mode de réalisation, la face d'appui correspond à une surface annulaire sensiblement plane d'un embout s'emboitant autour de la partie terminale du corps principal.

Selon un mode de réalisation, la partie terminale comporte une surface extérieure non circulaire.

Selon un mode de réalisation, l'écarteur présente une partie longitudinale de section cylindrique.

Avantageusement, le tirant est mobile en rotation autour de l'axe longitudinal X et en translation suivant ledit axe à l'intérieur du corps principal.

Selon un mode de réalisation, l'agrafe comporte en outre un ressort disposé dans un espace à l'intérieur du corps principal autour de la pince, de manière à exercer un effort longitudinal entre une surface d'appui du corps principal et un bord annulaire de l'extrémité filetée de la pince.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'une agrafe d'épinglage conforme aux principes de l'invention.

### Présentation des dessins

Les figures et les éléments d'une même figure ne sont pas nécessairement représentés à la même échelle. Sur l'ensemble des figures, les éléments identiques ou équivalents portent la même référence numérique.

Il est ainsi illustré en :
[Fig. 1] : une vue en perspective d'une agrafe d'épinglage selon un mode de réalisation de l'invention ;
[Fig. 2] : une vue de côté d'une agrafe d'épinglage selon un mode de réalisation qui ne correspond pas à l'étendue des revendications;
[Fig. 3] : une coupe de l'agrafe de la figure 2, en position initiale dans un assemblage de pièces ;
[Fig. 4] : une vue éclatée en perspective de l'agrafe de la figure 2 ;
[Fig. 5] : une vue de côté de la pince de l'agrafe de la figure 1 ;
[Fig. 6] : une vue partielle en perspective de l'agrafe de la figure 1 sans la pince, laissant entrevoir l'écarteur bloqué ;
[Fig. 7A] : une agrafe d'épinglage selon l'invention dans une position de serrage minimum ;
[Fig. 7B] : une agrafe d'épinglage selon l'invention dans une position de serrage intermédiaire ;
[Fig. 7C] : une agrafe d'épinglage selon l'invention dans une position de serrage maximum.

### Description détaillée de modes de réalisation

Dans le mode de réalisation décrit ci-après, on fait référence à une agrafe d'épinglage destinée principalement à l'assemblage temporaire d'au moins deux pièces percées, de type plaques, dans l'industrie aéronautique et spatiale. Cet exemple non limitatif est donné pour une meilleure compréhension de l'invention et n'exclut pas son utilisation sur d'autres types de structures dans des industries connexes telles que l'industrie automobile.

Dans la suite de la description, le terme « agrafe » est employé pour désigner une agrafe d'épinglage pour l'assemblage temporaire de structures percées.

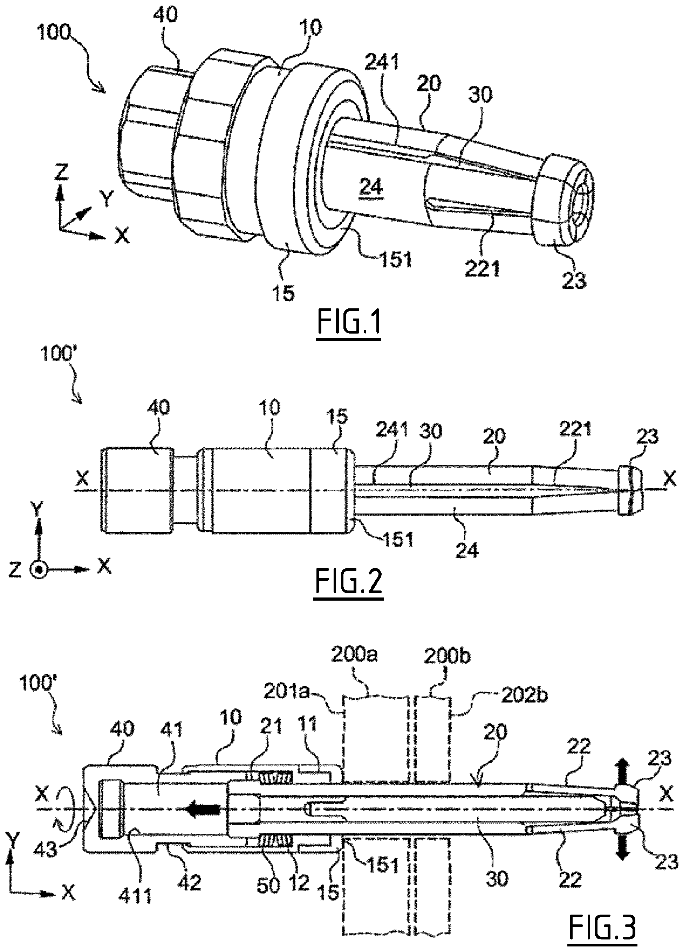

Les figures 1, 5 et 6 concernent un exemple de l'invention, et les figures 2, 3 et 4 concernent un exemple qui ne correspond pas à l'étendue des revendications.

Les figures représentent une agrafe 100 ou 100' comportant un corps principal 10 tubulaire, une pince 20 maintenue dans le corps principal et s'étendant axialement à l'extérieur dudit corps, un écarteur 30 fixe par rapport au corps principal et permettant d'ouvrir la pince dans une direction radiale, et un tirant 40 actionnant l'agrafe en se vissant sur la pince 20 à l'intérieur du corps principal 10, ce qui permet à ladite pince de s'ouvrir en reculant sur l'écarteur 30 fixe. On entend par « tubulaire » une forme allongée creuse dont la section droite, qui n'est pas nécessairement circulaire, peut être polygonale ou comporter des portions de diverses formes et/ou diamètres.

En référence à la figure 3, l'agrafe 100 permet d'assembler temporairement au moins deux pièces percées 200a et 200b, en les appuyant fermement l'une contre l'autre, par leur compression entre le corps principal 10 et la pince 20, ladite pince traversant des trous en vis-à-vis réalisés dans lesdites pièces. L'effort de compression résultant est commandé par le serrage de l'agrafe.

Le corps principal 10, selon les exemples illustrés, présente une forme globalement cylindrique de section circulaire et comporte à l'une de ses extrémités une partie terminale 11 fermée par un embout 15 destiné à venir au contact des pièces à assembler. La partie terminale 11 présente un diamètre inférieur à celui du corps principal de sorte à définir un épaulement contre lequel l'embout 15 vient en appui. La partie terminale 11 peut présenter une forme extérieure circulaire filetée pour recevoir un embout taraudé, ou une forme extérieure non circulaire, par exemple une forme carrée ou à six pans. Dans l'exemple des figures 1, 5 et 6, la partie terminale 11 comprend des encoches 112 pour recevoir les coins d'une pièce interne 13 distincte du corps 10, percée de part en part, présentant une forme extérieure globalement carrée. La rotation de la pièce 13 est ainsi bloquée dans le corps principal 10. Bien entendu, d'autres combinaisons de formes de la pièce interne 13 et du corps principal 10 sont possibles, comme par exemple une combinaison de formes multi-pans males dans une forme multi-pans femelles, avec un nombre de pans identiques ou multiples permettant l'emboitement sans rotation de la pièce interne dans le corps principal.

L'embout 15 peut par exemple être fixé par filetage ou emboité par clipsage ou encliquetage autour de la partie terminale 11 du corps principal 10, et définit une face d'appui 151 annulaire, de préférence plane, pour améliorer le contact avec les pièces à assembler. Accessoirement, l'embout 15 présente un arrondi en périphérie de sa surface d'appui 151 afin de limiter l'endommagement des pièces au contact de ladite surface.

Lorsque la partie terminale 11 est de forme non circulaire, l'embout 15 présente une forme complémentaire permettant d'attacher l'embout sur la partie terminale tout en bloquant sa rotation.

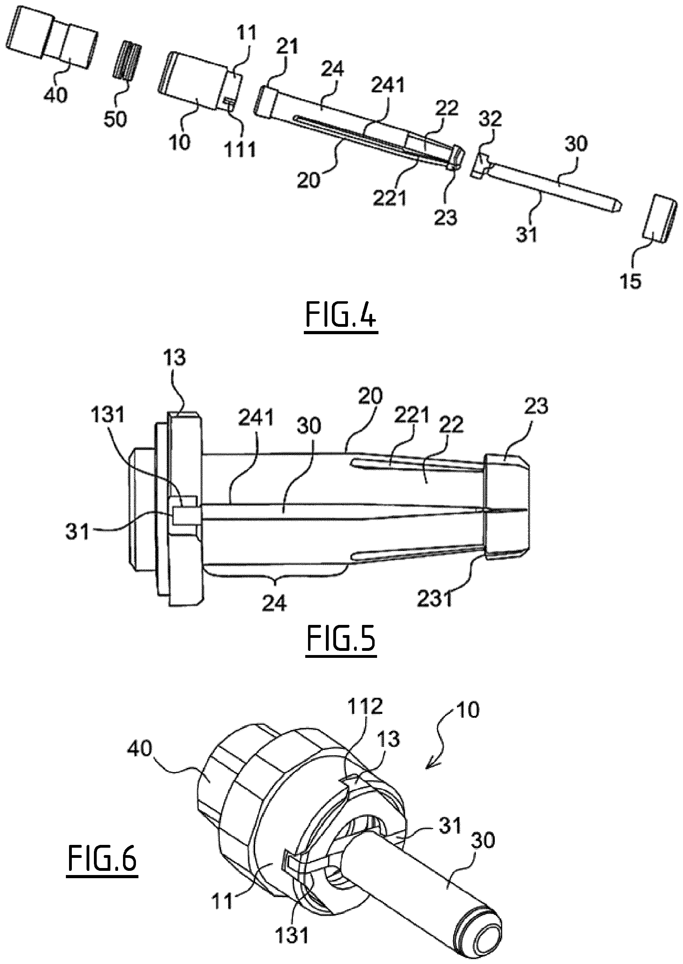

En variante non représentée, la surface d'appui 151 est formée par une surface annulaire de l'embout, et par une surface annulaire de l'extrémité 11 du corps principal 10 ou de la pièce interne 13 selon l'exemple des figures 5 et 6.

Dans une autre variante non représentée, l'agrafe ne comporte pas d'embout, et la surface d'appui 151 est formée directement par une extrémité du corps principal 10, par exemple en déformant cette extrémité radialement vers l'intérieur ou l'extérieur.

La pince 20, en référence aux figures 3 et 4, est tubulaire et comporte une extrémité filetée 21 et une deuxième extrémité pourvue de branches 22 flexibles dont chacune se termine par un bec 23 en saillie.

En position de repos (figures 1 et 2), les becs convergent les uns vers les autres de sorte que les branches 22 forment un cambrage tronconique.

La pince 20 comprend également une partie cylindrique 24 s'étendant entre l'extrémité filetée 21 et les branches 22 suivant l'axe longitudinal X.

Les branches 22 sont régulièrement espacées et définissent une pluralité de fentes 221, chacune entre deux branches adjacentes. Selon les exemples illustrés, deux fentes 221 diamétralement opposées se prolongent dans la partie cylindrique 24 de la pince 20 pour former une rainure 241 anti-rotation, jusqu'à proximité de l'extrémité filetée 21.

En variante non représentée, seule une fente 221 se prolonge dans la partie cylindrique 24 de la pince pour former une rainure 241 anti-rotation.

L'extrémité filetée 21, représentée en coupe sur la figure 3, est de forme cylindrique creuse et comporte un filetage sur sa surface latérale extérieure.

L'écarteur 30, en référence à la figure 4, est une tige en forme de T comportant une partie longitudinale 31, de préférence de section circulaire, et une partie transverse 32 formant la tête de l'écarteur. La section circulaire de la partie longitudinale 31 est dimensionnée pour permettre à la section cylindrique 24 de la pince et aux branches 22 de coulisser sur ladite partie longitudinale. La partie longitudinale 31 présente par ailleurs une longueur inférieure à la longueur de la pince 20 afin que les becs 23 des branches 22 convergent et présentent un diamètre extérieur au maximum égal au diamètre extérieur de la partie cylindrique 24 de la pince.

En variante, la partie longitudinale pourrait avoir une section rectangulaire, cruciforme ou ovale.

Dans les exemples représentés, la tête 32 de l'écarteur 30 est formée de deux plats, placés, dans le mode de réalisation qui ne correspond pas à l'étendue des revendications, dans une rainure diamétrale 111 de la partie terminale 11 du corps 10 (exemple de la figure 4) ou, dans le mode de réalisation qui correspond à l'étendue des revendications, dans une rainure 131 de la pièce interne 13 (exemple de la figure 6) de sorte que l'écarteur 30 soit bloqué en rotation, à un jeu fonctionnel prés, par rapport au corps comme représenté sur la figure 6.

En référence à la vue éclatée de la figure 4, l'écarteur 30 est introduit longitudinalement dans deux fentes 221 communicant avec deux rainures 241 de la pince 20, lesdites rainures permettant le passage des plats de la tête 32 de l'écarteur, ladite tête est ensuite bloquée dans la rainure 111 du corps principal 10. Ainsi, l'écarteur 30 est bloqué en rotation par rapport au corps principal, et empêche également la rotation de la pince 20, ladite pince étant bloquée en rotation par le biais des rainures 241 glissant sur les plats de la tête 32 de l'écarteur lors du déplacement de la pince.

Dans la variante comportant une seule rainure 241 d'anti-rotation, la tête de l'écarteur ne comprend évidemment qu'un seul plat conçu pour glisser dans la fente 221 associée à ladite rainure.

L'écarteur 30, fixe par rapport au corps principal 10, permet d'ouvrir la pince 20 en écartant les branches 22 les unes des autres sous l'effet d'un déplacement, plus précisément d'un retrait, de ladite pince par rapport au corps principal. Ce déplacement est produit par l'actionnement du tirant 40 qui constitue l'organe de commande de l'agrafe 100, 100'.

Le tirant 40, en référence à la figure 3, présente une forme globalement cylindrique de section circulaire de diamètre variable, le diamètre étant plus grand au niveau de l'extrémité libre du tirant, qui correspond à une zone de prise manuelle par l'utilisateur, afin de réduire l'effort de serrage nécessaire ou tout du moins de pré-serrage avant l'utilisation d'outils. Cette section variable définit une gorge 42 en amont du corps principal 10, entre l'extrémité libre du tirant et son extrémité opposée logée à l'intérieur du corps principal 10. En effet, le tirant 40 est monté, dans le corps principal 10, en liaison pivot glissant d'axe X.

Le tirant 40 comporte à son extrémité fermée une empreinte 43 adaptée pour recevoir la pince d'une autre agrafe. En effet, lorsque plusieurs agrafes sont acheminées par un tuyau les unes derrière les autres dans un système d'alimentation et de pose robotisée, l'empreinte 43 permet de centrer les agrafes dans le tuyau.

Selon l'exemple de réalisation illustré, l'empreinte est un cône d'angle α, par exemple 120°, et d'axe sensiblement confondu avec l'axe longitudinal X de l'agrafe. La forme de l'empreinte peut varier pour s'adapter à d'autres formes de pinces. L'empreinte est facultative, et le tirant peut être fermé par une paroi ou ouvert sans que cela impacte le fonctionnement de l'agrafe.

De manière préférentielle mais non obligatoire, un élément élastique 50 est placé dans un espace à l'intérieur du corps principal autour de la portion cylindrique 24 de la pince 20, de manière à exercer un effort longitudinal entre une surface d'appui 12 du corps principal 10 et un bord annulaire de l'extrémité filetée 21 comme représenté sur la figure 3. Dans l'exemple de la figure 3, l'élément élastique est composé de rondelles Belleville, mais un ressort de compression pourrait alternativement être utilisé. La fonction de l'élément élastique est de maintenir un effort de compression constant sur les deux pièces percées 200a et 200b, malgré le fluage d'un mastic interposé entre les pièces 200a et 200b, qui réduirait l'épaisseur des pièces serrées par l'agrafe. L'élément élastique 50 absorbe également les potentielles vibrations perçues par l'agrafe posée dans la structure lors du perçage de la peau d'un aéronef par exemple.

L'élément élastique 50 exerce en permanence un effort selon l'axe longitudinal X tendant à repousser la pince 20 dans le sens du retrait, à savoir vers l'alésage 41 du tirant 40.

L'agrafe 100 ou 100' telle que décrite permet d'assembler provisoirement les deux pièces 200a et 200b, qui peuvent par ailleurs être d'épaisseurs différentes, en vue de leur fixation définitive par rivetage par exemple. L'agrafe peut également être utilisée dans le cas d'une pluralité de pièces à assembler.

Pour ce faire, la pince 20 est initialement introduite dans les perçages desdites pièces, qui sont alors positionnés en vis-à-vis, l'agrafe étant en position de serrage minimum avec la pince en position fermée. Toujours en position de serrage minimum, l'agrafe est introduite dans les pièces par le biais de sa pince 20 jusqu'à ce que la face d'appui 151 de l'embout 15 du corps principal 10 vienne au contact d'une face avant 201a de la première pièce 200a.

Ensuite, l'agrafe est serrée progressivement par la mise en rotation du tirant 40, mobile en rotation et en translation par rapport au corps principal 10, pour ramener les becs d'accrochage 23 des branches 22 en appui contre une face arrière 202b de la deuxième pièce 200b. En effet, comme expliqué plus haut, la rotation du tirant 40 produit une translation de la pince 20 suivant la direction longitudinale X, due à la coopération entre l'alésage taraudé 41 et l'extrémité filetée 21 initialement engagée dans ledit alésage. Le déplacement de la pince 20 correspond ainsi à son retrait partiel à l'intérieur du tirant 40. Le serrage de l'agrafe est alors poursuivi jusqu'à obtenir une position de serrage maximum qui correspond à une compression ferme des pièces 200a et 200b entre le corps principal 10 et les becs d'accrochage 23. Dans cette position, les becs d'accrochage 23 est au contact de la face arrière 202b de la deuxième pièce 200b par leurs surfaces d'accrochage 231.

L'accrochage de la face arrière 202b, ou plus précisément de la paroi du perçage de ladite face, de la deuxième pièce 200b est rendu possible par l'ouverture de ladite pince au fur et à mesure du serrage de l'agrafe, cette ouverture se traduisant par un écartement des branches 22 de sorte que le diamètre extérieur des becs 23, de la surface annulaire formée par les surfaces d'accrochage 231, soit supérieur au diamètre du perçage de la deuxième pièce 200b dans lequel l'agrafe est introduite.

En effet, le déplacement de la pince 20 et, par là-même de ses branches 22, dans le sens allant du corps principal 10 vers le tirant 40 provoque un écartement des branches 22 sur l'écarteur 30, ce dernier restant fixe par rapport au corps principal 10.

Le profil des branches 22, et notamment le profil intérieur au contact de l'écarteur 30, présente une forme adaptée pour que lesdites branches commencent à s'écarter l'une de l'autre dès le début du serrage de l'agrafe.

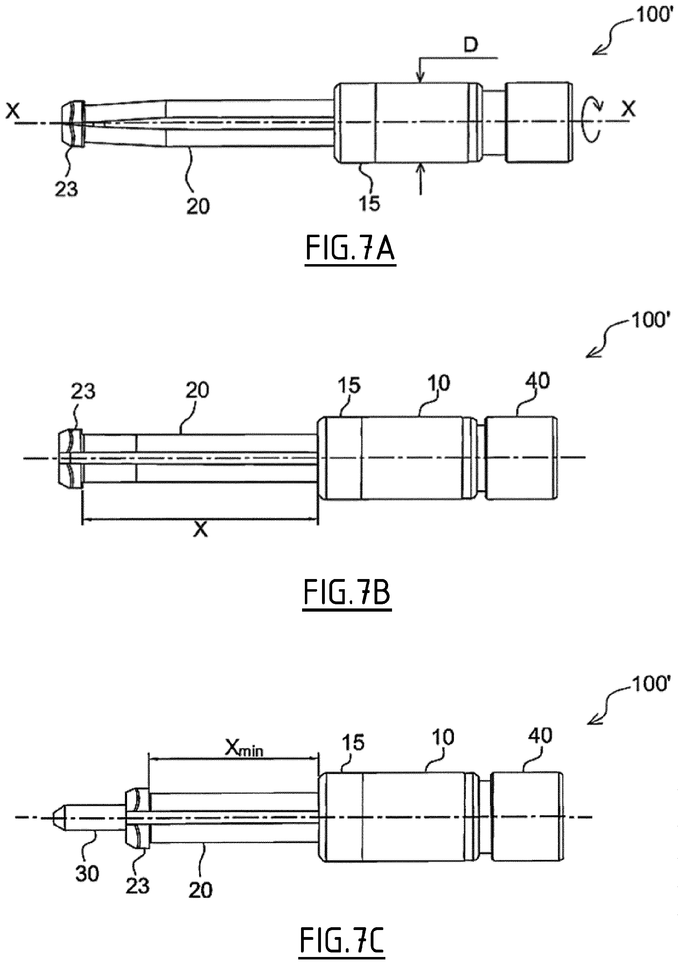

L'écartement des branches 22 de la pince 20 peut se poursuivre jusqu'à ce que l'écarteur 30 traverse le bec d'accrochage 23 comme représenté sur la figure 7C.

Ainsi, l'effort exercé par le bec d'accrochage, alors au contact de la paroi du trou de la pièce arrière de l'assemblage, entraine celle-ci contre les autres pièces, dont la pièce avant externe est en butée contre la face d'appui du corps principal. Les pièces sont par conséquent fermement pressées.

Les figures 7A à 7C illustrent l'agrafe dans des positions de serrage successives, dans lesquelles la course x de la pince 20 décroit progressivement au fur et à mesure du serrage pour atteindre la course minimum xₘᵢₙ correspondant à la plus faible épaisseur totale d'un assemblage pour lequel l'agrafe 100 peut être utilisée.

De préférence, l'agrafe présente un plus grand diamètre D, par exemple au niveau de son corps principal 10.

Le plus grand diamètre D et la longueur L du corps peuvent être réduits par rapport aux agrafes à écarteur fixe de l'art antérieur parce que l'écrou six pans des agrafes de l'art antérieur a été supprimé, du fait du report de la fonction d'anti-rotation des pinces sur la tête de l'écarteur. La longueur du corps est également réduite car les pinces et la tige filetée peuvent être fabriquées d'une seule et même pièce, et ne nécessitent plus de portion de sertissage, ni d'écrou six pans. Grâce à la suppression de l'écrou six pans, une longueur utile plus importante de la pince peut être engagée dans le tirant, tout en permettant de réduire la longueur totale de l'ensemble formé par le corps et le tirant.

Ainsi, l'invention permet de concevoir des agrafes à écarteur fixe pouvant traverser des perçages qui varient entre 3,2 mm à 6, 35 mm pour un diamètre de corps de 10,6 mm contre un diamètre de corps de 12,7 mm pour les agrafes existantes.

Au vu de la présente description, certains éléments de l'invention peuvent être réalisés différemment ou remplacés par des d'autres éléments équivalents sans sortir du cadre de l'invention, celle-ci n'étant pas limitée aux seuls exemples décrits et illustrés. Par exemple, le nombre de branches de la pince cylindrique peut varier, et la forme de l'élément transverse de l'écarteur peut également varier et faire varier en conséquence le nombre de rainures diamétrales servant à son blocage.

## Revendications

1. Agrafe d'épinglage (100, 100'), pour l'assemblage temporaire d'au moins deux pièces structurales (200a, 200b) percées, comportant un corps principal (10) tubulaire s'étendant suivant un axe longitudinal X et présentant une face d'appui (151) destinée à venir au contact d'une première face (201a) des pièces structurales, une pince (20) apte à traverser des perçages en regard, réalisés dans lesdites pièces, la pince étant mobile en translation suivant l'axe longitudinal, entrainée par la rotation autour dudit axe d'un tirant (40) pourvu d'un alésage taraudé (41) coopérant avec une extrémité filetée (21) de ladite pince, la pince (20) comprenant des branches (22) flexibles se terminant chacune par un bec d'accrochage (23) destiné à venir au contact d'une dernière face (202b) des pièces structurales, lesdites branches étant aptes à s'écarter radialement et progressivement le long d'un écarteur (30), placé entre lesdites branches et fixe par rapport au corps principal (10), sous l'effet du recul de la pince,
l'écarteur (30) comportant une extrémité transverse (32) bloquée en rotation dans une rainure de blocage (131) ménagée dans un élément fixe par rapport au corps principal,
la pince (20) comportant au moins une rainure longitudinale (241) apte à coulisser sur ladite extrémité transverse lors du déplacement de la pince par rapport au corps principal et apte à bloquer la rotation de ladite pince par rapport à ladite extrémité transverse,
dans laquelle au moins une fente (221) séparant deux branches adjacentes (22) communique avec au moins la rainure longitudinale (241) de la pince,
l'agrafe étant **caractérisée en ce que** la rainure de blocage (131) est réalisée dans une pièce interne (13) logée dans une partie terminale (11) du corps principal, ladite pièce interne étant fixe par rapport audit corps principal,
et **en ce que** la pièce interne (13) comprend une surface extérieure multi-pans et la partie terminale (11) comporte une surface intérieure multi-pans.

2. Agrafe selon la revendication 1, dans laquelle la face d'appui (151) correspond à une surface annulaire sensiblement plane d'un embout (15) s'emboitant autour de la partie terminale (11) du corps principal (10).

3. Agrafe selon la revendication 2, dans laquelle la partie terminale (11) comporte une surface extérieure non circulaire.

4. Agrafe selon l'une quelconque des revendications précédentes, dans laquelle l'écarteur (30) présente une partie longitudinale (31) de section cylindrique.

5. Agrafe selon l'une quelconque des revendications précédentes, dans laquelle le tirant (40) est mobile en rotation autour de l'axe longitudinal X et en translation suivant ledit axe à l'intérieur du corps principal (10).

6. Agrafe selon l'une quelconque des revendications précédentes, comportant en outre un ressort (50) disposé dans un espace à l'intérieur du corps principal (10) autour de la pince (20), de manière à exercer un effort longitudinal entre une surface d'appui (12) du corps principal (10) et un bord annulaire de l'extrémité filetée (21) de la pince.

## Patentansprüche

1. Klammer (100, 100') zur zeitweiligen Verbindung von mindestens zwei durchbohrten Strukturteilen (200a, 200b), mit einem rohrförmigen Hauptkörper (10), der sich entlang einer Längsachse X erstreckt und eine Auflagefläche (151) aufweist, die dazu bestimmt ist, um mit einer ersten Seite (201a) der Strukturteile in Kontakt zu kommen, einer Zange (20), die geeignet ist, gegenüberliegende Bohrungen zu durchqueren, die in den genannten Teilen ausgeführt sind, wobei die Zange entlang der Längsachse translatorisch beweglich ist und die durch die Drehung einer Zugstange (40) um die genannte Achse gedreht wird, die mit einer Gewindebohrung (41) versehen ist, die mit einem Gewindeende (21) der genannten Zange zusammenwirkt, wobei die Zange (20) flexible Arme (22) umfasst, die jeweils in einer Einhängenase (23) enden, die dazu bestimmt ist, in Kontakt mit einer letzten Seite (202b) der Strukturteile zu kommen, wobei die Arme geeignet sind, sich unter der Wirkung des Rückstoßes der Zange radial und progressiv entlang eines Abstandshalters (30) zu spreizen, der zwischen den Armen angeordnet und in Bezug auf den Hauptkörper (10) feststehend ist,
wobei der Abstandshalter (30) ein Querende (32) aufweist, das drehbar in einer Verriegelungsnut (131) verriegelt ist, die in einem in Bezug auf den Hauptkörper festen Element ausgebildet ist,
die Zange (20) mindestens eine Längsnut (241) aufweist, die geeignet ist, auf dem Querende zu gleiten, wenn die Zange in Bezug auf den Hauptkörper bewegt wird, und geeignet ist, die Drehung der Zange in Bezug auf das Querende zu blockieren,
wobei mindestens ein Schlitz (221), der zwei benachbarte Arme (22) trennt, mit mindestens der Längsnut (241) der Zange in Verbindung steht,
wobei die Klammer **dadurch gekennzeichnet ist, dass** die Verriegelungsnut (131) in einem Innenteil (13) ausgebildet ist, das in einem Endabschnitt (11) des Hauptkörpers untergebracht ist, wobei das Innenteil in Bezug auf den Hauptkörper feststehend ist,
und dadurch, dass das Innenteil (13) eine mehrkantige Außenfläche und der Endabschnitt (11) eine mehrkantige Innenfläche aufweist.

2. Klammer nach Anspruch 1, wobei die Auflagefläche (151) einer im Wesentlichen ebenen Ringfläche eines Ansatzstücks (15) entspricht, das um den Endabschnitt (11) des Hauptkörpers (10) herumpasst.

3. Klammer nach Anspruch 2, wobei der Endabschnitt (11) eine nicht kreisförmige Außenfläche aufweist.

4. Klammer nach einem der vorhergehenden Ansprüche, wobei der Abstandshalter (30) einen Längsabschnitt (31) mit zylindrischem Querschnitt aufweist.

5. Klammer nach einem der vorhergehenden Ansprüche, wobei die Zugstange (40) innerhalb des Hauptkörpers (10) um die Längsachse X drehbar und entlang dieser Achse translatorisch bewegbar ist.

6. Klammer nach einem der vorhergehenden Ansprüche, die außerdem eine Feder (50) umfasst, die in einem Raum innerhalb des Hauptkörpers (10) um die Zange (20) herum angeordnet ist, um eine Längsbewegung zwischen einer Auflagefläche (12) des Hauptkörpers (10) und einer ringförmigen Kante des Gewindeendes (21) der Zange auszuüben.

## Claims

1. Pin staple (100, 100'), for the temporary assembly of at least two penetrated structural parts (200a, 200b), consisting of a tubular main body (10) extending along a longitudinal X axis and a bearing face (151) intended to come in contact with a first face (201a) of the structural parts, a clamp (20) capable of passing through the facing piercings, made in said parts, the clamp being mobile in translation following the longitudinal axis, driven by the rotation around the centreline of the pull rod (40) with a tapped bore (41) cooperating with a threaded end (21) of said clamp, the clamp (20) consisting of flexible branches (22) each of which end with a snapping spout (23) intended to come into contact with a final face (202b) of the structural parts, the said branches being capable of moving apart radially and progressively along a spacer (30), placed between the said branches and fixed to the main body (10), under the effect of the clamp backing up,
the spacer (30) having a transverse end (32) locked against rotation in a locking groove (131) formed in an element fixed relative to the main body,
the clamp (20) comprising at least one longitudinal groove (241) capable of sliding over said transverse end when the clamp is moved relative to the main body and capable of blocking the rotation of said clamp relative to said transverse end,
in which at least one slot (221) separating two adjacent branches (22) communicates with at least the longitudinal groove (241) of the clamp,
the clip being **characterised in that** the locking groove (131) is formed in an internal part (13) housed in an end portion (11) of the main body, said internal part being fixed relative to said main body,
and **in that** the inner part (13) comprises a multi-fluted outer surface and the end part (11) comprises a multi-fluted inner surface.

2. A staple according to claim 1, in which the bearing face (151) corresponds to a substantially flat annular surface of an end piece (15) fitting around the end part (11) of the main body (10).

3. A staple as claimed in claim 2, wherein the end portion (11) has a non-circular outer surface.

4. A staple according to any one of the preceding claims, in which the spacer (30) has a longitudinal part (31) of cylindrical cross-section.

5. A staple according to any one of the preceding claims, in which the pull rod (40) is movable in rotation about the longitudinal axis X and in translation along said axis inside the main body (10).

6. A staple according to any one of the preceding claims, further comprising a spring (50) arranged in a space inside the main body (10) around the clamp (20), so as to exert a longitudinal force between a bearing surface (12) of the main body (10) and an annular edge of the threaded end (21) of the clamp.
